# FASCICULE DE BREVET EUROPEEN

(11) **EP 0 612 564 B1**
(45) Date de publication et mention de la délivrance du brevet: **03.06.1998**
(21) Numéro de dépôt: 94400249.2
(22) Date de dépôt: 04.02.1994
(51) Int. Cl.: B01J 29/40, B01J 29/06, B01J 29/54, B01J 29/04

(54) **Catalyseur composite et son utilisation en aromatisation d'hydrocarbures C2-C12**
Komposit-Katalysator und seine Verwendung für die Aromatisierung von Kohlenwasserstoffen
Composite catalyst and its use for the aromatisation of C2-C12 hydrocarbon

(30) Priorité: 24.02.1993 FR 9302204
(43) Date de publication de la demande: 31.08.1994
(73) Titulaire: INSTITUT FRANCAIS DU PETROLE, 92502 Rueil-Malmaison (FR)
(72) Inventeur: Alario, Fabio, F-92200 Neuilly sur Seine (FR); Benazzi, Eric, F-78360 Montesson (FR); Deves, Jean-Marie, F-78400 Chatou (FR); Joly, Jean-François, F-75003 Paris (FR)

(56) Documents cités:
- EP-A- 0 082 211
- EP-A- 0 279 568
- EP-A- 0 507 656
- US-A- 5 080 878

## Description

La présente invention concerne un catalyseur, dit catalyseur composite, qui contient :
- une zéolithe de structure MFI contenant dans sa charpente le silicium et au moins un élément choisi dans le groupe formé par l'aluminium et le gallium, et dont la surface externe de ses cristallites a été modifiée après sa synthèse, et dénommée ci-après "N/MFI",
- une matrice,
- au moins un élément dopeur choisi dans le groupe constitué par le gallium et le zinc, de préférence le gallium, lorsque la zéolithe ne contient pas de gallium dans sa charpente cristalline,
- éventuellement au moins un élément choisi dans le groupe constitué par le gallium et le zinc, de préférence le gallium, lorsque la zéolithe contient du gallium dans sa charpente cristalline,
- éventuellement au moins un élément choisi dans le groupe constitué par les métaux alcalins et alcalino-terreux.

Ainsi le catalyseur composite selon l'invention comprend au moins un élément dopeur choisi dans le groupe formé par le gallium et le zinc, de préférence le gallium, déposé sur au moins l'un des supports choisi dans le groupe formé par la matrice et la zéolithe.

L'invention concerne également la préparation du catalyseur et son utilisation dans les réactions d'aromatisation des hydrocarbures comportant de 2 à 12 atomes de carbone par molécule.

Les catalyseurs à base de zéolithes dopées au gallium ou au zinc, sont connus pour être actifs et sélectifs en aromatisation du propane et du butane. Classiquement, les hydrocarbures à plus de 6 atomes de carbone par molécule sont transformés en aromatiques par reformage catalytique en utilisant des catalyseurs du type alumine acide contenant du platine, métal auquel on peut ajouter par exemple de l'étain ou du rhénium. Ces catalyseurs de reformage sont néanmoins très peu performants pour l'aromatisation des hydrocarbures contenant moins de 6 atomes de carbone par molécule. Il y a donc un grand intérêt pratique à trouver des catalyseurs performants pour l'aromatisation des coupes riches en hydrocarbures du type C2 - C12, et plus particulièrement du type C3-C10.

La réaction d'aromatisation des hydrocarbures contenant moins de 9 atomes de carbone par molécule en présence de zéolithes a déjà fait l'objet de brevets et de publications. Plusieurs systèmes catalytiques à base de zéolithe MFI sont revendiqués, ces systèmes pouvant se distinguer par les ajouts qu'ils contiennent. Schématiquement, on peut distinguer :
(i) les systèmes dopés au gallium (US-A-4175057), et,
(ii) les systèmes dopés au zinc (US-A-4288645).

Ces systèmes souffrent tous d'un défaut important, à savoir une sélectivité élevée en méthane.

Les travaux de recherche effectués par la demanderesse l'ont conduite à découvrir que, de façon surprenante, l'utilisation d'un catalyseur composite contenant :
- une zéolithe MFI dont la surface externe de ses cristallites a été modifiée par au moins un traitement postérieur à sa synthèse, appelée "N/MFI", contenant éventuellement dans sa charpente cristalline du gallium,
- du gallium et/ou du zinc sous forme oxyde dans le cas où la zéolithe ne contient pas de gallium initialement dans sa charpente cristalline,
- éventuellement du gallium et/ou du zinc sous forme oxyde dans le cas où la zéolithe contient du gallium initialement dans sa charpente cristalline,
- éventuellement au moins un élément choisi dans le groupe constitué par les métaux alcalins et alcalino-terreux,
- et une matrice,
conduit à des performances catalytiques dans les réactions d'aromatisation de charges hydrocarbonées comprenant des composés contenant de 2 à 12 atomes de carbone par molécule améliorées par rapport aux catalyseurs de l'art antérieur.

La zéolithe MFI à partir de laquelle est obtenue la zéolithe N/MFI contenue dans le catalyseur de la présente invention peut être préparée par toutes les techniques décrites dans l'art antérieur. Ainsi la synthèse de ladite zéolithe peut être réalisée en milieu classique OH- en présence ou en absence d'agent organique et/ou d'alcool. Le document "Synthesis of high silica zeolites, P. Jacobs and J. Martens, Studies in Surface Science and Catalysis, Vol. 33, 1987" décrit la synthèse classique de la zéolithe MFI. La zéolithe MFI à partir de laquelle est obtenue la zéolithe N/MFI contenue dans le catalyseur de la présente invention peut également avoir été synthétisée dans des milieux moins classiques comme par exemple le milieu fluorure en présence ou en absence de composé organique. La zéolithe utilisée dans la présente invention contient, dans sa charpente cristallisée, du silicium et au moins un élément choisi dans le groupe formé par l'aluminium et le gallium.

Dans le cas où la zéolithe MFI contient du gallium dans sa charpente cristalline, elle peut être préparée par toutes les techniques décrites dans l'art antérieur, et peut également être synthétisée dans des milieux moins classiques comme par exemple le milieu fluorure en présence (par exemple brevet US-A-5 010 048 et demandes de brevet EP-A-342 675, EP-A-489 151 et EP-A-472 462) ou en absence (par exemple demande de brevet EP-A-500 413) de structurants organiques.

Dans le cas où, dans la présente invention, la zéolithe MFI contient au moins un élément choisi parmi les métaux alcalins ou alcalino-terreux (ainsi notée A/MFI), son dépôt dans ladite zéolithe peut par exemple s'effectuer comme suit.

La zéolithe MFI est :
- soit transformée en une forme hydrogène, notée H-MFI, par élimination pratiquement totale des composés organiques et/ou des cations alcalins ou alcalino-terreux qu'elle contient éventuellement après synthèse. Toutes les techniques décrites dans l'art antérieur peuvent être utilisées pour le passage à la forme hydrogène, comme par exemple les échanges ioniques suivis ou non de calcination ou les traitements chimiques divers. Un ou plusieurs alcalin(s) ou alcalino-terreux additionnel(s) est (sont) ensuite introduit(s) par l'intermédiaire de sels en solutions aqueuses ou organiques par toutes les techniques connues de l'art antérieur, pour ensuite obtenir la A/MFI.
- soit directement transformée en une forme contenant un ou plusieurs alcalin(s) ou alcalino-terreux additionnel(s), par élimination pratiquement totale éventuelle des composés organiques, ce ou ces alcalin(s) additionnel(s) étant alors apporté(s) par le milieu de synthèse de la zéolithe. La teneur en alcalin(s) ou alcalino-terreux additionnel(s) peut être alors éventuellement augmentée aisément à partir de sels de cet (ces) alcalin(s) ou alcalino-terreux en solutions aqueuses ou organiques par toutes les techniques connues de l'art antérieur, pour ensuite obtenir la A/MFI.

Ces méthodes ne limitent pas la portée de l'invention. L'introduction éventuelle d'au moins un métal alcalin ou alcalino-terreux peut aussi se faire à tout moment de la préparation du catalyseur selon la présente invention, notamment après la mise en forme.

La teneur en alcalin(s) ou alcalino-terreux additionnel(s) déposé(s) sur la zéolithe MFI est comprise entre 0,001 et 6 % en poids, de préférence entre 0,005 et 3 % en poids.

La zéolithe MFI obtenue après l'étape de sa synthèse, ou A/MFI dans le cas où elle contient au moins un élément choisi dans le groupe constitué par les alcalins ou alcalino-terreux, subit au moins un traitement tel que décrit ci-après, qui a pour but en particulier d'en modifier l'acidité.

La zéolithe MFI, ou A/MFI, est soumise à au moins un traitement par au moins une solution diluée de fluorosilicate d'un cation, de préférence d'hexafluorosilicate d'ammonium, qui comprend généralement entre 0.0006 moles et 0.006 moles pour 100g de zéolithe sèche, et de préférence entre 0.002 et 0.006 moles pour 100g de zéolithe sèche. On obtient ainsi un taux de désalumination global inférieur à 5% atomique pour la la zéolithe ainsi traitée, c'est-à dire que le traitement enlève au plus 5% des atomes d'aluminium présents dans la charpente.

Le traitement par au moins une solution de fluorosilicate d'un cation est réalisé sur une zéolithe MFI dont le rapport atomique Si/Al global est généralement compris entre 5 et 1000 et de préférence entre 10 et 500. Ladite zéolithe MFI est de préférence sous forme NH4+ ou bien contient encore partiellement le structurant organique nécessaire à sa synthèse; elle peut aussi se trouver sous forme H⁺ ou Na⁺. La mise sous forme NH4⁺ d'échantillon de zéolithe MFI s'effectue soit à partir de la forme sodique de la MFI synthétisée en milieu fluorure en l'absence de structurant organique, en réalisant plusieurs échanges ioniques par des solutions concentrées de nitrate d'ammonium (10N), soit à partir de la forme calcinée, sous air à 550°C, de la MFI contenant un structurant organique. La calcination étant ensuite suivie de plusieurs échanges ioniques par des solutions concentrées de nitrate d'ammonium (10N). La teneur pondérale en sodium, par rapport au poids de MFI sèche, est généralement inférieure à 2000 ppm, de préférence inférieure à 1000 ppm et, de manière encore plus préférée, inférieure à 200 ppm.

Le fluorosilicate utilisé en tant qu'agent de désalumination et source de silicium, permettant la réinsertion d'atomes de silicium à la place des atomes d'aluminium extraits à la surface externe des cristallites de zéolithe, peut être l'un des sels possédant la formule suivante: M2/xSiF6, où M est un cation métallique ou non métallique possédant la valence x. Les cations M peuvent donc être NH₄⁺, des alkyls ammonium, K⁺, Na⁺, Li⁺, Ba²⁺, Mg²⁺, Cd²⁺, Cu⁺, Cu²⁺ Ca²⁺, Cs⁺, Fe²⁺, Co²⁺, Pb²⁺, Mn²⁺, Rb⁺, Ag⁺, Sr²⁺, Zn²⁺, Tl⁺ ou H⁺. De préférence, l'hexafluorosilicate d'ammonium est utilisé, car il conduit à la formation de sel d'aluminium (NH4)₃AlF₆ soluble dans l'eau qui peut être aisément éliminé. En général, la température de traitement de la zéolithe par l'hexafluorosilicate d'ammonium est comprise entre 20 et 100°C, et de préférence entre 50 et 100 °C. Les quantités d'hexafluorosilicate d'ammonium employées, généralement inférieures à 0.006 moles pour 100g de zéolithe sèche, sont calculées par rapport à une zéolithe séchée sous flux d'air sec, à 450° C, durant 4 heures. Le traitement de la zéolithe s'effectue en présence d'acétate d'ammonium qui permet de tamponner le pH du milieu réactionnel à des valeurs comprises entre 4 et 8, et de préférence entre 5,5 et 7 (valeurs de pH pour lesquelles la zéolithe ne subit pas de destruction de la charpente par attaque acide directe).

Après l'étape de mise en contact de la solution de fluorosilicate d'un cation, de préférence d'hexafluorosilicate d'ammonium, et de la suspension de zéolithe, par exemple dans une solution d'acétate d'ammonium, le mélange réactionnel est laissé, sous agitation vigoureuse, à la température désirée pendant une période généralement comprise entre 30 minutes et 48 heures, de préférence généralement comprise entre 1 et 2 heures. La zéolithe est ensuite filtrée à la température de la réaction et abondamment lavée au moins une fois à l'eau bouillante.

L'ensemble de traitement décrit ci-dessus, traitement de la zéolithe MFI par la solution de fluorosilicate d'un cation, de préférence d'hexafluorosilicate d'ammonium, suivi de la filtration et d'au moins un lavage abondant à l'eau bouillante, peut être recommencé autant de fois que cela est nécessaire pour conférer à la zéolithe le taux de désalumination de la surface externe des cristaux désiré, et conduisant à un catalyseur plus sélectif.

Après ce ou ces ensemble(s) de traitements, la zéolithe modifiée subit un traitement thermique destiné à décomposer les cations, par exemple ammonium, présents au sein du réseau et à obtenir ainsi principalement la forme acide (H+) de la zéolithe ainsi modifiée et désormais dénommée N/MFI.

La technique telle que décrite ci-dessus illustre la présente invention sans toutefois en limiter la portée.

Toutes les zéolithes de type MFI synthétisées dans l'un des systèmes suivants : Si-Al, Si-Al-Ga, Si-Ga, conviennent pour la présente invention. Cependant, leur rapport Si/T où T représente Al et/ou Ga, est généralement supérieur ou égal à 5, de préférence supérieur à 10 et de manière encore plus préférée compris entre 13 et 500.

La zéolithe N/MFI, dénomination générale désignant la zéolithe MFI utilisée dans la présente invention et modifiée par la technique décrite précédemment, peut être :
- soit soumise telle quelle à un dépôt de gallium et/ou de zinc, de préférence de gallium, lorsque la zéolithe ne contient pas de gallium dans sa charpente cristalline, et éventuellement soumise à un dépôt de gallium et/ou de zinc, de préférence de gallium, lorsque la zéolithe contient du gallium dans sa charpente cristalline,
- soit mélangée avec les autres constituants du catalyseur, le gallium et/ou le zinc, de préférence le gallium, pouvant alors être introduits ultérieurement dans ledit mélange si la zéolithe ne contient pas de gallium dans sa charpente cristalline, et éventuellement introduits ultérieurement dans ledit mélange si la zéolithe contient du gallium dans sa charpente cristalline.

Le dépôt de gallium et/ou de zinc, de préférence de gallium, peut également intervenir préalablement à sa modification par exemple par l'une au moins des techniques présentées précédemment.

L'introduction éventuelle d'au moins un métal alcalin ou alcalino-terreux peut aussi se faire à tout moment de la préparation du catalyseur selon la présente invention.

De nombreuses techniques de dépôt de gallium et/ou de zinc peuvent être utilisées dans la présente invention, parmi lesquelles on peut citer les échanges ioniques grâce à l'utilisation de sels en solution aqueuse, ou les imprégnations par des solutions desdits sels.

La teneur cumulée en ces deux métaux éventuellement déposés sur le catalyseur composite est comprise entre 0,01 et 10 % en poids, de préférence entre 0,03 et 4 % en poids.

La matrice comprend au moins un oxyde réfractaire, et en particulier au moins un oxyde d'un métal choisi dans le groupe constitué par le magnésium, l'aluminium, le titane, le zirconium, le thorium, le silicium et le bore. De plus, elle peut aussi comprendre du charbon.

La matrice préférée est l'alumine, dont la surface spécifique peut être avantageusement comprise entre 10 et 600 m2/g et de préférence entre 150 et 400 m2/g.

La demanderesse a découvert que, de façon surprenante, l'utilisation d'un catalyseur composite contenant :
- une zéolithe MFI, possédant dans sa charpente le silicium et au moins un élément choisi dans le groupe formé par l'aluminium et le gallium, dont la surface de ses cristaux a été modifiée par au moins un traitement postérieur à sa synthèse décrit ci-dessus, et ainsi appelée "N/MFI",
- du gallium et/ou du zinc, de préférence du gallium, sous forme oxyde, si la zéolithe ne contient pas de gallium dans sa charpente cristalline,
- éventuellement du gallium et/ou du zinc, de préférence du gallium, sous forme oxyde, si la zéolithe contient du gallium dans sa charpente cristalline,
- une matrice,
- et éventuellement au moins un élément choisi dans le groupe constitué par les métaux alcalins et alcalino-terreux,
conduit à des performances catalytiques dans les réactions d'aromatisation des paraffines contenant de 2 à 12 atomes de carbone par molécule améliorées par rapport aux catalyseurs de l'art antérieur.

Le catalyseur composite de la présente invention peut être préparé suivant deux voies dont le principe est donné ci-après, la réalisation pratique étant connue de l'homme du métier.

### Première voie

La zéolithe MFI, ou bien la zéolithe A/MFI, ou bien la zéolithe N/MFI, est mélangée avec la matrice. Ce mélange peut être réalisé entre deux poudres, entre deux solides mis préalablement en forme, entre une poudre et un solide mis préalablement en forme. On peut également mettre en forme conjointement les deux solides par toutes les techniques décrites dans l'art antérieur : pastillage, extrusion, dragéification, coagulation en goutte, séchage par atomisation. Lors de cette opération de mise en forme, on peut si nécessaire ajouter un additif de mise en forme, choisi dans le groupe constitué par la silice et l'alumine. Ainsi on a procédé au mélange de la zéolithe avec la matrice et à la mise en forme.

Après mélange et mise en forme, on procède au dépôt du gallium et/ou du zinc, de préférence de gallium, sur l'ensemble constitué de la matrice et de la zéolithe lorsque la zéolithe ne contient pas de gallium dans sa charpente cristalline, et éventuellement au dépôt de gallium et/ou de zinc, de préférence de gallium, sur l'ensemble constitué de la matrice et de la zéolithe lorsque la zéolithe contient du gallium dans sa charpente cristalline. Lorsque l'on procède au dépôt de gallium et de zinc, l'ordre de dépôt de ces deux métaux est peu important.

Si la zéolithe MFI a été initialement mélangée avec la matrice, la modification par la technique présentée précédemment est alors nécessaire. Si la zéolithe ne contient pas initialement au moins un métal alcalin ou alcalino-terreux, cette introduction éventuelle peut se faire à tout moment lors de la préparation.

### Deuxième voie

On dépose préalablement le gallium et/ou le zinc, de préférence le gallium, sur la zéolithe MFI, ou bien la zéolithe A/MFI, ou bien la zéolithe N/MFI, lorsque la zéolithe ne contient pas de gallium dans sa charpente cristalline, et éventuellement le gallium et/ou le zinc, de préférence le gallium, lorsque la zéolithe contient du gallium dans sa charpente cristalline. L'ordre d'introduction de ces deux éléments sur la matrice est indifférent lorsque l'on procède au dépôt de gallium et de zinc.

Puis on procède au mélange de la zéolithe contenant éventuellement du gallium et/ou du zinc, de préférence du gallium, avec la matrice, et à leur mise en forme, la mise en forme étant obtenue dans les mêmes conditions que décrites précédemment (première voie).

Si la zéolithe MFI a été initialement mélangée avec la matrice, la modification de la surface externe de ses cristaux par la technique présentée précédemment est alors nécessaire. Si la zéolithe ne contient pas initialement au moins un métal alcalin ou alcalino-terreux, cette introduction éventuelle peut se faire à tout moment lors de la préparation.

La méthode préférée de préparation consiste à :
- introduire la N/MFI, contenant éventuellement au moins un métal alcalin ou alcalino-terreux, dans la matrice par mise en forme des deux poudres, la mise en forme étant de préférence effectuée après un broyage micronique, qui peut être réalisé en utilisant la technique du broyage humide,
- puis déposer sur le mélange mis en forme le gallium et/ou le zinc, de préférence le gallium, lorsque la zéolithe ne contient pas de gallium dans sa charpente cristalline, et éventuellement déposer sur le mélange mis en forme le gallium et/ou le zinc, de préférence le gallium, lorsque la zéolithe contient du gallium dans sa charpente cristalline.

Le catalyseur composite contient entre 1 et 99 % (en poids par rapport à la masse totale du catalyseur) de zéolithe N/MFI, le complément à 100 % étant constitué par la matrice, éventuellement le gallium et/ou le zinc, de préférence le gallium, et éventuellement au moins un métal alcalin ou alcalino-terreux. La proportion respective de zéolithe et de matrice varie dans une large gamme, car elle dépend d'une part du rapport Si/T de la zéolithe, où T est Al et/ou Ga, et d'autre part de la teneur éventuelle en gallium et de la teneur éventuelle en zinc.

Le catalyseur composite contient en poids :
- entre 1 et 99% en poids de zéolithe modifiée N/MFI contenant dans sa charpente du silicium et au moins un élément choisi parmi l'aluminium et le gallium,
- entre 1 et 99% en poids d'une matrice,
- entre 0,01 et 10% en poids, de préférence entre 0,03 et 4%, d'un élément dopeur choisi dans le groupe constitué par le gallium et le zinc lorsque la zéolithe ne contient pas de gallium dans sa charpente cristalline,
- éventuellement entre 0,01 et 10% en poids, de préférence entre 0,03 et 4%, d'un élément dopeur choisi dans le groupe constitué par le gallium et le zinc lorsque la zéolithe contient du gallium dans sa charpente cristalline.
- éventuellement entre 0.001 et 6% en poids, de préférence entre 0.005 et 3% en poids, d'au moins un élément choisi dans le groupe constitué par les métaux alcalins et alcalino-terreux.

L'élément dopeur est de préférence le gallium, cet élément étant introduit dans la zéolithe et/ou la matrice c'est-à-dire qu'il est déposé sur au moins l'un des supports choisi dans le groupe formé par la matrice et la zéolithe, avant ou après mise en forme de la N/MFI et de la matrice.

Dans le procédé selon l'invention, à l'issue de la préparation, le catalyseur mis en forme contient une zéolithe N/MFI et des métaux, et on procède à une calcination sous air à une température comprise entre 350°C et 1000°C, de préférence entre 400°C et 700°C, et de manière encore plus préférée entre 450°C et 600°C.

Le catalyseur de la présente invention décrit précédemment est mis en oeuvre pour l'aromatisation des alcanes contenant de 2 à 12 atomes de carbone par molécule, en présence ou non d'oléfines. Cette réaction de production d'hydrocarbures aromatiques revêt un intérêt particulier car elle peut permettre, par exemple, d'une part de valoriser des fractions légères provenant d'opérations de raffinage en les transformant en des produits à plus haute valeur ajoutée (benzène, toluène et xylènes), d'autre part de transformer des charges paraffiniques pouvant contenir des oléfines en bases pour carburant à haut indice d'octane, tout en contribuant dans les deux cas à la production de quantités importantes d'hydrogène indispensable pour les procédés d'hydrotraitement par exemple.

La charge hydrocarbonée qui contient des composés contenant de 2 à 12 atomes de carbone par molécule est mise en contact avec le catalyseur de la présente invention à une température comprise entre 400 et 700 °C.

Les exemples qui suivent précisent l'invention sans toutefois en limiter la portée.

### Exemple 1 : Zéolithe MFI forme hydrogène et catalyseur A contenant cette zéolithe H-MFI et du gallium.

On utilise une zéolithe H-MFI forme hydrogène caractérisée par un rapport Si/Al égal à 27, une teneur en sodium égale à 0,009 % en poids et un volume poreux mesuré par adsorption d'azote à 77K de 0,189 cm3/g.

Du gallium est déposé sur cette zéolithe par échange ionique. La solution d'échange est préparée à partir de nitrate de gallium Ga(NO3)3 de normalité 0,15 N. Le pH de la solution de nitrate de gallium est ajusté à la valeur de 2 par ajout d'ammoniaque.

La teneur en gallium atteinte, après trois échanges ioniques successifs de la zéolithe H-MFI avec la solution décrite ci-dessus, dans le catalyseur A ainsi obtenu est égale à 3,5 % en poids.

### Exemple 2 : Zéolithe MFI forme hydrogène modifiée par des traitements à l'hexafluorosilicate d'ammonium (catalyseur B).

On utilise la même zéolithe H-MFI forme hydrogène de l'exemple 1. Cette zéolithe est séchée sous air sec à 450°C pendant 4 heures. Elle est ensuite mise sous forme ammonium (notée NH4-MFI) au travers de traitements par des solutions aqueuses de nitrate d'ammonium à reflux. Après filtration, le solide est séché à l'étuve à 120°C.

La zéolithe NH4-MFI ainsi obtenue est ensuite mise en suspension dans une solution aqueuse d'acétate d'ammonium à 100°C. Une solution aqueuse contenant 1.07 gramme d'hexafluorosilicate d'ammonium est alors ajoutée pour une masse initiale de 100 grammes de zéolithe sèche. Après un temps de contact de 2 heures sous agitation, le solide est abondamment rincé à l'eau.

Cette opération est successivement recommencée 10 fois et le solide est finalement séché et calciné à 550°C sous air.

Les caractéristiques du solide obtenu (catalyseur B) sont :
- un rapport molaire Si/Al global égal à 32,
- un rapport molaire Si/Al de surface égal à 91.

Ce rapport de surface est mesuré par XPS (ESCA) et est caractéristique de la surface externe des cristaux de zéolithe, où ont donc principalement lieu les étapes de désalumination et de réinsertion des atomes de silicium.

### Exemple 3 : Zéolithe MFI forme hydrogène modifiée par des traitements à l'hexafluorosilicate d'ammonium et contenant du gallium (catalyseur C).

Le gallium est déposé sur le catalyseur B de l'exemple 2 par la même méthode que celle décrite dans l'exemple 1.

La teneur en gallium atteinte, après trois échanges ioniques successifs du catalyseur B, dans le catalyseur C ainsi obtenu est égale à 3,45 % en poids.

### Exemple 4 : Performances des catalyseurs sur propane

On se propose de transformer du propane en hydrocarbures aromatiques. On opère pour cela en présence d'un des quatre catalyseurs (zéolithe H-MFI, catalyseur A, catalyseur B et catalyseur C) décrits précédemment. Tous les catalyseurs ont été mis en forme par pastillage.

Les conditions opératoires sont les suivantes :
- - température: : 550°C
- - pression: : atmosphérique
- - pph: : 3 h-1

Les résultats des tests sont reportés dans le tableau 1.

**Tableau 1**

| | | Sélectivités (% poids) | | | | | |
|---|---|---|---|---|---|---|---|
| Catalyseur | Conversion (% poids) | CH₄ | C₂H₆ C₂H₄ | C₃H₆ | butanes + butènes | C5+ | Aromatiques |
| Zéolithe H-MFI (comparatif) | 41 | 29 | 32 | 13 | 10 | 1 | 15 |
| Catalyseur B (comparatif) | 26 | 28 | 31 | 12 | 8 | 2 | 19 |
| Catalyseur A (comparatif) | 50 | 13 | 20 | 10 | 2 | 0 | 55 |
| Catalyseur C (selon l'invention) | 42 | 12 | 19 | 9 | 1 | 0 | 59 |

La modification de la zéolithe MFI forme hydrogène par l'hexafluorosilicate d'ammonium (catalyseur B) a pour conséquence d'augmenter très significativement la sélectivité en produits aromatiques lors de la transformation du propane. Parallèlement, le catalyseur C selon l'invention, préparé à partir du catalyseur B conduit à une sélectivité en produits aromatiques supérieure à celles du catalyseur A comparatif, obtenu à partir de la zéolithe H-MFI non modifiée.

### Exemple 5 : Performances des catalyseurs sur naphtas légers

On se propose de transformer une charge constituée d'un mélange d'hydrocarbures contenant de 5 à 6 atomes de carbone par molécule. On opère pour cela en présence d'un des quatre catalyseurs (zéolithe H-MFI, catalyseur A, catayseur B et catalyseur C) décrits précédemment. Tous les catalyseurs ont été mis en forme par pastillage.

Ces catalyseurs ont été testés en transformation d'une charge C5-C6 dont la composition est la suivante (exprimée en % poids) :

| | **C5** | **C6** |
|---|---|---|
| Paraffines | 90 | 5,4 |
| Naphtènes | 3,7 | 0,9 |

Les conditions opératoires sont les suivantes :
- - température: : 480°C
- - pression: : 2,5 bars
- - pph: : 2 h-1

Les résultats des tests sont reportés dans le tableau 2.

**TABLEAU 2**

| | | Sélectivités (% poids) | | | | | |
|---|---|---|---|---|---|---|---|
| Catalyseur | Conversion (% poids) | CH₄ | C₂H₆ C₂H₄ | C₃H₈ + C3H6 | butanes + butènes | oléfines C₅+C₆ | Aromatiques |
| Zéolithe H-MFI (comparatif) | 93 | 30 | 26 | 14 | 18 | 1 | 11 |
| Catalyseur B (comparatif) | 78 | 27 | 24 | 13 | 17 | 1 | 18 |
| Catalyseur A (comparatif) | 95 | 7 | 17 | 28 | 8 | 1 | 39 |
| Catalyseur C (selon l'invetion) | 86 | 6 | 16 | 28 | 7 | 1 | 42 |

La modification de la zéolithe MFI forme hydrogène par l'hexafluorosilicate d'ammonium (catalyseur B) a pour conséquence d'augmenter très significativement la sélectivité en produits aromatiques lors de la transformation d'une charge C5-C6. Parallèlement, le catalyseur C selon l'invention, préparé à partir du catalyseur B conduit à une sélectivité en produits aromatiques supérieure à celles du catalyseur A comparatif, obtenu à partir de la zéolithe H-MFI non modifiée.

## Revendications

1. Catalyseur composite contenant :
- une zéolithe de structure MFI qui a été modifiée après sa synthèse par au moins traitement par au moins une solution diluée de fluorosilicate d'un cation, le taux de désalumination global de la zéolithe ainsi traitée étant inférieur à 5% atomique, ladite zéolithe contenant dans sa charpente le silicium et au moins un élément choisi dans le groupe formé par l'aluminium et le gallium,
- une matrice,
- au moins un élément dopeur choisi dans le groupe formé par le gallium et le zinc déposé sur au moins l'un des supports choisi dans le groupe formé par la matrice et la zéolithe.

2. Catalyseur selon la revendication 1 contenant, en poids par rapport à la masse totale de catalyseur, de 1 à 99 % de ladite zéolithe.

3. Catalyseur selon l'une des revendications 1 ou 2 dont la teneur en élément dopeur est comprise entre 0,01 et 10 % en poids.

4. Catalyseur composite selon l'une des revendications 1 à 3 contenant de 0,001 à 6 % en poids d'au moins un élément choisi dans le groupe formé par les métaux alcalins et alcalino-terreux.

5. Catalyseur composite selon l'une des revendications 1 à 4 dans lequel ledit élément dopeur est le gallium.

6. Catalyseur composite selon l'une des revendications 1 à 5 tel que ladite solution diluée contient entre 0,0006 et 0,006 moles de fluorosilicate d'un cation pour 100 g de zéolithe sèche.

7. Catalyseur composite selon l'une des revendications 1 à 6 dans lequel ledit fluorosilicate est l'hexafluorosilicate d'ammonium.

8. Catalyseur composite selon l'une des revendications 1 à 7 dans lequel la matrice est de l'alumine.

9. Utilisation du catalyseur composite défini selon l'une des revendications 1 à 8 dans un procédé de production d'hydrocarbures aromatiques à partir d'une charge hydrocarbonée comprenant des composés comportant de 2 à 12 atomes de carbone par molécule.

## Claims

1. Composite catalyst containing:
- a MFI structure zeolite which has been modified following synthesis by at least one treatment with at least one dilute fluorosilicate cation solution, the total dealumination ratio of the treated zeolite being less than 5 atomic %, said zeolite containing silicon and at least one element selected from the group formed by aluminium and gallium in its framework,
- a matrix,
- at least one doping element selected from the group formed by gallium and zinc deposited on at least one support selected from the group formed by the matrix and the zeolite.

2. Catalyst according to claim 1 containing 1 to 99 % by weight with respect to the total catalyst mass of said zeolite.

3. Catalyst according to claim 1 or claim 2 wherein the doping element content is between 0.01 and 10 % by weight.

4. Composite catalyst according to any one of claims 1 to 3 containing 0.001 to 6 % by weight of at least one element selected from the group formed by the alkali and alkaline-earth metals.

5. Composite catalyst according to any one of claims 1 to 4 wherein said doping element is gallium.

6. Composite catalyst according to any one of claims 1 to 5 wherein said dilute solution contains between 0.0006 and 0.006 moles of cation fluorosilicate per 100 g of dry zeolite.

7. Composite catalyst according to any one of claims 1 to 6 wherein said fluorosilicate is ammonium hexafluorosilicate.

8. Composite catalyst according to any one of claims 1 to 7 wherein the matrix is alumina.

9. Use of a composite catalyst as defined in any one of claims 1 to 8 in a process for the production of aromatic hydrocarbons from a hydrocarbon feedstock comprising compounds containing 2 to 12 carbon atoms per molecule.

## Patentansprüche

1. Verbundkatalysator enthaltend:
einen Zeolith von MFI Struktur, der nach seiner Synthese durch wenigstens eine Behandlung durch wenigstens eine verdünnte Fluorsilikatlösung eines Kations modifiziert ist, wobei der Entaluminierungs-Gesamtgrad des so behandelten Zeoliths unter 5 Atom% beträgt und dieser Zeolith in seinem Gitter das Silicium und wenigstens ein aus der durch Aluminium und Gallium gebildeten Gruppe gewähltes Element enthält,
- eine Matrix
- wenigstens ein Dotierungselement, gewählt aus der durch Gallium und Zink gebildeten Gruppe, das auf wenigstens einen der Träger abgeschieden wurde, der aus der durch die Matrix und den Zeolith gebildeten Gruppe gewählt wurde.

2. Katalysator nach Anspruch 1, enthaltend in Gewicht bezogen auf die Gesamtmasse des Katalysators von 1 bis 99% dieses Zeoliths.

3. Katalysator nach einem der Ansprüche 1 oder 2, dessen Gehalt an Dotierungselement zwischen 0,01 und 10 Gew.% beträgt.

4. Verbundkatalysator nach einem der Ansprüche 1 bis 3, zwischen 0,001 und 6 Gew.% wenigstens eines Elementes enthaltend, das aus der durch die Alkalimetalle und Erdalkalimetalle gebildeten Gruppe gewählt ist.

5. Verbundkatalysator nach einem der Ansprüche 1 bis 4, bei dem dieses Dotierungselement Gallium ist.

6. Verbundkatalysator nach einem der Ansprüche 1 bis 5, von einer Ausbildung derart, daß diese verdünnte Lösung zwischen 0,0006 und 0,006 Mole Fluorsilikat eines Kations für 100g trockenen Zeoliths enthält.

7. Verbundkatalysator nach einem der Ansprüche 1 bis 6, bei dem dieses Fluorsilikat Ammoniumhexafluorsilikat ist.

8. Verbundkatalysator nach einem der Ansprüche 1 bis 7, bei dem die Matrix Aluminiumoxid ist.

9. Verwendung des Verbundkatalysators nach einem der Ansprüche 1 bis 8 in einem Verfahren zur Herstellung aromatischer Kohlenwasserstoffe aus einer kohlenwasserstoffhaltigen Charge, die 2 bis 12 Kohlenstoffatome pro Molekül aufweisende Verbindungen umfaßt.
